(19) Europäisches Patentamt
European Patent Office
Office européen des brevets

(11) **EP 3 596 505 B1**

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **18703983.9**

(22) Anmeldetag: **07.02.2018**

(51) Internationale Patentklassifikation (IPC):
*G01S 17/93* (2020.01)   *B60W 40/076* (2012.01)
*G01S 17/89* (2020.01)   *G01S 17/42* (2006.01)

(52) Gemeinsame Patentklassifikation (CPC):
**B60W 40/076; G01S 17/931;** B60W 2420/408;
G01S 17/42; G01S 17/89

(86) Internationale Anmeldenummer:
**PCT/EP2018/053020**

(87) Internationale Veröffentlichungsnummer:
**WO 2018/166718 (20.09.2018 Gazette 2018/38)**

(54) **ANORDNUNG UND VERFAHREN ZUR BESTIMMUNG EINES STEIGUNGSSIGNALS IN EINEM FAHRZEUG**

ARRANGEMENT AND METHOD FOR DETERMINING A GRADIENT SIGNAL IN A VEHICLE

SYSTÈME ET PROCÉDÉ POUR DÉTERMINER UN SIGNAL DE DÉCLIVITÉ DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2017 DE 102017204306**

(43) Veröffentlichungstag der Anmeldung:
**22.01.2020 Patentblatt 2020/04**

(73) Patentinhaber: **ZF Friedrichshafen AG**
**88046 Friedrichshafen (DE)**

(72) Erfinder:
• **WOLF, Daniel**
**88048 Friedrichshafen (DE)**
• **BIRK, Markus**
**88045 Friedrichshafen (DE)**
• **ZANELLA, Mauro Cesar**
**88046 Friedrichshafen (DE)**

(74) Vertreter: **ZF Friedrichshafen AG**
**Gewerblicher Rechtsschutz**
**Löwentalerstraße 20**
**88046 Friedrichshafen (DE)**

(56) Entgegenhaltungen:
US-A- 5 714 928     US-A1- 2010 030 473
US-A1- 2015 120 244    US-A1- 2015 336 546

## EP 3 596 505 B1

**Beschreibung**

Die vorliegende Erfindung betrifft eine Anordnung zur Bestimmung eines Steigungssignals in einem Fahrzeug gemäß dem Oberbegriff des Patentanspruchs 1, sowie ein entsprechendes Verfahren.

Zur Messung von Neigungen sind in unterschiedlichsten Branchen der Industrie verschiedene Methoden bekannt. Sensorvorrichtungen und Aufbauten zur Winkelbestimmung mit einer Messung und Einsatz von Markern und/oder Reflektoren auf dem zu messenden Objekt sind beispielsweise aus dem europäischen Patent EP 2 910 512 B1, sowie der US-Patentanmeldung US 2011/260 033 A oder der US-Patentanmeldung US 2016/128 783 A bekannt. Eine Winkelbestimmung über einen LaserScanner ist z.B. aus der US-Patentanmeldung US 2016/076 228 A bekannt. Des Weiteren ist eine Bestimmung von Objekten im Fahrweg eines Fahrzeugs bekannt aus der US 2015/336546 A1 und der US 2010/030473 A1. Eine Bestimmung der Breite einer Fahrbahn ist aus der US 2015/120244 A1 bekannt. Ferner können Winkel durch zwei Messungen mit einem Laserdistanzmessgerät bestimmt werden. US 5 714 928 A zeigt ein System zur Vermeidung von Kollisionen für Fahrzeuge. Das System umfasst einen ersten Vorschausensor, der ein Hindernis vor dem Fahrzeug in einer ersten distalen Erkennungszone erkennt, um ein erstes Signal zu erzeugen, das auf das Vorhandensein des Hindernisses und den Abstand zwischen dem Hindernis und dem vorderen Ende des Fahrzeugs hinweist, und einen zweiten Vorschausensor, der das Hindernis vor dem Fahrzeug in einer zweiten proximalen Erkennungszone erkennt, um ein zweites Signal zu erzeugen, das mindestens auf das Vorhandensein des Hindernisses hinweist. Das System umfasst außerdem einen dritten Fahrzeuggeschwindigkeitssensor, der die Fahrgeschwindigkeit des Fahrzeugs erkennt und ein indikatives Signal für die Fahrzeuggeschwindigkeit erzeugt.

Solche digitalen oder analogen Inklinometer bestimmen den Winkel nur an der Position des Sensors oder durch mehrere Messungen der Steigungen einer zurückgelegten Wegstrecke, einen linienförmigen Laser-Scan und nachträgliche Auswertung, oder durch Reflektoren an festen Gegenständen. Hierfür sind auch optische Verfahren, also z.B. Bildauswertungsverfahren, bekannt.

Für eine Neigungsbestimmung in bewegten Bezugssystemen können feste Markierungen nicht verwendet werden, da das Gelände unbekannt ist, das vermessen werden soll. Außerdem muss eine zeitversetzte Messung erfolgen. Nach dem bekannten Stand der Technik ist für bewegte, also auch Verlagerungen unterworfene Bezugssysteme wie z.B. bei Fahrzeugen bisher lediglich ein sehr aufwändiges Verfahren aus der deutschen Patentanmeldung DE 10 2007 037 162A1 bekannt, bei dem Messinformationen aufgezeichnet werden, die mindestens die mit dem Laserscanner abgetasteten Messpunkte und die zu den jeweiligen Messpunkten gehörigen Lage des Laserscanners enthalten, in Bezug auf Triggerzeitpunkte, die durch den Laserscanner vorgegeben sind, sowie in einem Zeitnormal vorgegebene Zeiten.

Allerdings ist bisher kein Verfahren bekannt, bei dem der Steigungswinkel des Geländes im Vorschaubereich eines Fahrzeuges, also in einem bewegten Bezugssystem, dynamisch in einfacher Weise und ohne die Verwendung eines Laserscanners ermittelt werden kann. Ein Laserscanner dient zur dreidimensionalen Abtastung einer Objektoberfläche durch einen Laserstrahl in einem definierten Winkelraster. Somit können Objektoberflächen mit hoher Punktdichte gescannt, also abgetastet wird.

Deshalb ist es eine Aufgabe dieser Erfindung, eine Anordnung und ein Verfahren bereitzustellen, welche eine solche Bestimmung ohne Laserscanner ermöglichen. Diese Aufgabe wird erfindungsgemäß durch die Merkmale der unabhängigen Patentansprüche gelöst. Vorteilhafte Ausgestaltungen sind Gegenstand der abhängigen Ansprüche.

Vorgeschlagen wird eine Anordnung zur Bestimmung eines Steigungssignals in einem Fahrzeug, wie in Anspruch 1 angegeben.

Durch die vorgeschlagene Anordnung kann eine einfache und kostengünstige sowie dynamische Bestimmung von Neigungsdaten in einem bewegten Bezugssystem ohne die Verwendung eines Laserscanners erfolgen.

In einer Ausgestaltung sendet der erste Laserdistanzsensor zu zumindest dem ersten und dem zweiten Zeitpunkt zwei in Fahrzeuglängsachse und Fahrzeugquerrichtung gespreizte Laserstrahlen derart aus, dass einer der gespreizten Laserstrahlen der erste Laserstrahl ist und in Richtung des ersten Messpunkts ausgesendet wird, und der zweite der gespreizten Laserstrahlen in Richtung eines von dem ersten Messpunkt entfernten weiteren Messpunkt ausgesendet wird.

**In** einer Ausgestaltung erfolgt das Aussenden der zwei Laserstrahlen durch sequentielles Umschalten, umfassend ein Drehen des Laserdistanzsensors oder ein Umschalten der Optik des Laserdistanzsensors.

In einer Ausgestaltung weist die Anordnung einen zweiten an einer Vorderseite des Fahrzeugs in einem vorgegebenen Winkel zur Fahrzeuglängsachse geneigt angeordneten Laserdistanzsensor auf, der dazu eingerichtet ist, zumindest zu dem ersten und dem zweiten Zeitpunkt zumindest einen zweiten Laserstrahl auf einen zweiten Messpunkt vor dem Fahrzeug zu richten, wobei das zumindest eine Mittel ferner dazu eingerichtet ist, die Länge des Laserstrahls beider Laserdistanzsensoren und jeweils zumindest einen zugehörigen Vektor der Laserstrahlen zu ermitteln, und wobei die zumindest eine Ermittlungseinrichtung ferner dazu eingerichtet ist, einen Differenzvektor aus dem Bewegungsvektor und den ermittelten Vektoren der Laserstrahlen zu ermitteln und daraus das Steigungssignal zu bilden.

Durch die Verwendung von mehr als einem Laserstrahl oder sogar mehr als einem Laserdistanzsensor wird eine höhere Genauigkeit bei der Messung erzielt.

In einer Ausgestaltung sind der erste und der zweite Laserdistanzsensor in Fahrzeugquerrichtung nebeneinander angeordnet. Durch die Anordnung nebeneinander kann auch eine Querneigung der Fahrbahn erfasst werden.

In einer Ausgestaltung weist die Anordnung ferner eine Weiterverarbeitungseinrichtung auf, die dazu eingerichtet ist, das Steigungssignal weiterzuverarbeiten, wobei die Weiterverarbeitung durch Senden des Steigungssignals an eine im Fahrzeug vorhandene Regelungseinrichtung erfolgt, die dazu eingerichtet ist, das Steigungssignal weiterzuverarbeiten und eine Anpassung der Dynamikparameter basierend auf dem empfangenen und verarbeiteten Steigungssignal durchzuführen. **In** einer alternativen Ausgestaltung weist die Anordnung ferner eine Weiterverarbeitungseinrichtung auf, die dazu eingerichtet ist, das Steigungssignal weiterzuverarbeiten, wobei die Weiterverarbeitung durch Senden des Steigungssignals an eine externe Verarbeitungseinrichtung erfolgt, die dazu eingerichtet ist, das Steigungssignal in Steuersignale weiterzuverarbeiten und an die Weiterverarbeitungseinrichtung im Fahrzeug zur Durchführung der Anpassung der Dynamikparameter des Fahrzeugs zurückzusenden.

Durch eine Weiterverarbeitung und/oder das Bereitstellen der Ergebnisse können sowohl das Ego-Fahrzeug als auch andere Fahrzeuge von den Informationen, also dem ermittelten Steigungssignal, profitieren. Die Daten und Ergebnisse können zur Weiterverarbeitung verwendet werden, um Fahrzeugparameter für die Steigung bzw. Neigung zu optimieren, entweder über eine interne oder eine externe Einrichtung. Profitieren heißt auch, dass Informationen als Rohdaten zur Weiterverarbeitung zwischen Fahrzeugen ausgetauscht werden können, so dass eine vorausschauende Strategie geplant werden kann. Auch können Daten als bereits verarbeitete Daten, die eine Einstellung von Dynamikparametern vorgeben, ausgetauscht werden. Dies ermöglicht eine schnelle und vorausschauende Anpassung an die Steigung bzw. Neigung des Geländes. Auch können Fahrzeuge, die keine eigenen Berechnungen anstellen können, von diesen Informationen profitieren. Somit kann ein Verschleiß z.B. von Bremsen vermindert werden, als auch Kraftstoff eingespart werden.

Ferner wird ein Verfahren zur Bestimmung eines Steigungssignals in einem Fahrzeug bereitgestellt, wie in Anspruch 7 angegeben.

In einer Ausgestaltung erfolgt in einem dritten Schritt eine Weiterverarbeitung des ermittelten Steigungssignals.

In einer Ausgestaltung erfolgt die Weiterverarbeitung durch interne Berechnung eines Steuersignals zur Anpassung der Dynamikparameter des Fahrzeugs und Durchführung der Anpassung, oder durch Senden des Steigungssignals zur externen Verarbeitung und Empfangen zumindest eines aus dem Steigungssignal ermittelten Steuersignals zur Anpassung der Dynamikparameter des Fahrzeugs, und Durchführung der Anpassung.

In einer Ausgestaltung werden das weiterverarbeitete Steigungssignal und/oder das Steuersignal zur Digitalisierung des Geländes verwendet und/oder anderen Fahrzeugen bereitgestellt.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen.

Bevorzugte Ausführungsformen der Erfindung werden nachfolgend anhand der beigefügten Zeichnung näher erläutert.

Fig. 1 zeigt eine Darstellung einer stationären Berechnung der Steigung eines Geländes gemäß dem Stand der Technik.

Fig. 2 zeigt eine Darstellung eines Fahrzeugs zur Laserdistanzmessung zur Bestimmung einer Fahrbahnneigung im Vorschaubereich zu zwei unterschiedlichen Zeitpunkten gemäß einer Ausführung der vorliegenden Erfindung.

Fig. 3 zeigt eine Draufsicht auf ein Fahrzeug nach Figur 1 gemäß einer Ausführung der vorliegenden Erfindung.

Fig. 4 zeigt ein Ablaufdiagramm des Verfahrens gemäß einer Ausführung der vorliegenden Erfindung.

In den nachfolgenden Figurenbeschreibungen sind gleiche Elemente bzw. Funktionen mit gleichen Bezugszeichen versehen.

Die in den Figuren verwendeten Indizes 0 bzw. 1 bezeichnen den Zeitpunkt t=0 bzw. t=1, an dem die jeweiligen Parameter, also z.B. La, Lb, Pa, Pb, Ga oder $\varphi$ bestimmt oder gemessen werden.

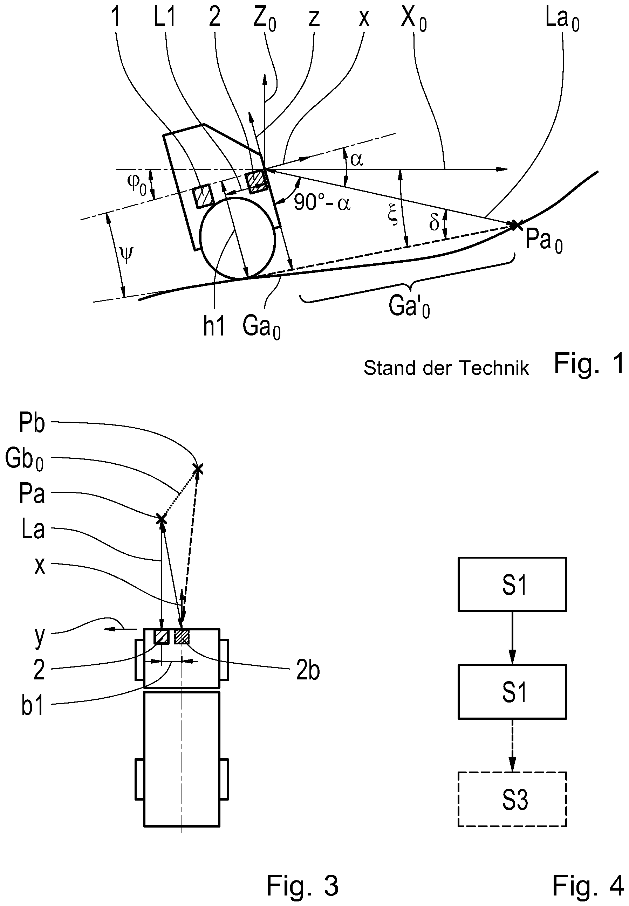

Figur 1 stellt die stationäre Berechnung der Steigung bzw. Neigung eines Geländes gemäß dem Stand der Technik dar. Diese Berechnung wird im Rahmen der Beschreibung der Erfindung genauer erklärt, da sie als Basis für die Bestimmung der Neigung der vorliegenden Erfindung dient.

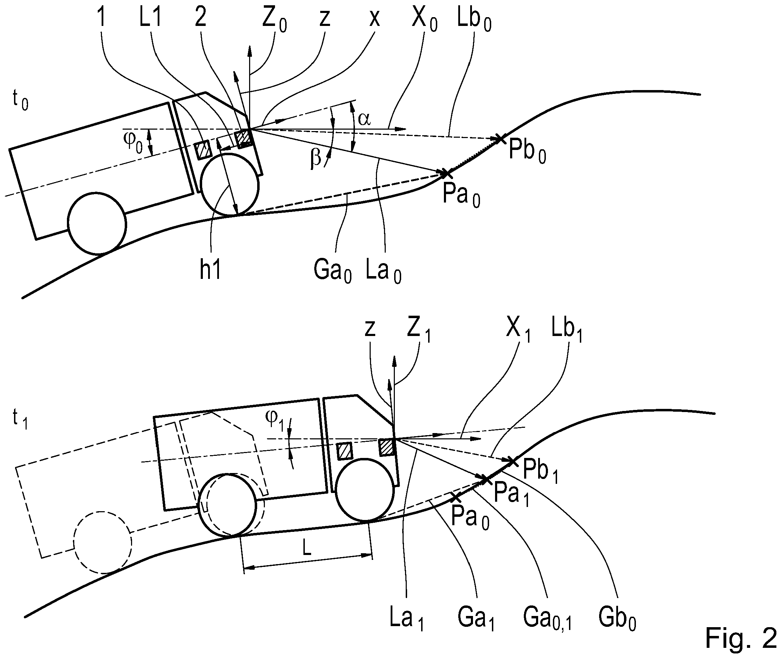

Bezug nehmend auf Figuren 2 und 3 wird nachfolgend sowohl der Aufbau der Anordnung als auch das Verfahren zur Bestimmung der Neigung gemäß einer Ausführungsform beschrieben, hier der Bestimmung der Neigung eines Geländes für ein Fahrzeug. Basierend auf dieser Bestimmung kann durch eine Weiterverarbeitung eine Optimierung von unterschiedlichen Parametern, vor allem von Parametern der Längs-, Vertikal- und Querdynamik, erfolgen.

Ein bewegtes Bezugssystem ist ein Bezugssystem, das kein Inertialsystem ist, d.h. es ist unter anderem Beschleunigungen bzw. Bewegungen und Verlagerungen unterworfen.

Die Anordnung zur Bestimmung einer Gelände- bzw. Fahrbahnneigung in einem Vorschaubereich eines Fahrzeuges (bewegtes Bezugssystem) besteht aus mindestens einem punktuell messenden Laserdistanzsensor 2 und einem Inklinometer 1, das als Winkelsensor, bevorzugt als digitaler Winkelsensor, ausgeführt sein kann. Diese sind im oder am Fahrzeug angeordnet, wobei der Winkelsensor den Winkel $\varphi$ des Fahrzeuges, genauer dessen Längsachse, gegenüber einem geostationären, also erdfesten, Inertial- bzw. Absolut-System ausgibt. In Figur 1 und Figur 2, obere Abbildung, ist dieser Winkel als $\varphi_0$ bezeichnet, d.h. dass dies der Winkel $\varphi$ zum Zeitpunkt $t_0$ ist. In Figur 2, untere Abbildung, ist dieser Winkel als $\varphi_1$ bezeichnet, d.h. dass dies der Winkel $\varphi$ zum Zeitpunkt $t_1$ ist.

Der Laserdistanzsensor 2 ist in einer geometrisch bekannten Position, welche aus den in Figur 2, obere Abbildung, und Figur 3 gekennzeichneten Parametern L1, h1 und b1 bestimmt wird. Als L1 ist der Abstand (in X-Richtung) zwischen dem Inklinometer bzw. Winkelsensor 1 und dem Laserdistanzsensor 2 bezeichnet, als h1 ist die Höhe (in Z-Richtung) zwischen Fahrzeuglängsachse X auf Höhe des Laserdistanzsensors 2 und dem Gelände bezeichnet, wobei die Gerade der Höhe h1 mit der Längsachse des Fahrzeugs einen 90°-Winkel bildet, also lotrecht dazu ist. Als b1 ist der Abstand des Laserdistanzsensors 2 (in Y-Richtung) zur Fahrzeuglängsachse (X-Richtung) bzw., wie in Figur 3 gezeigt, der Abstand des Laserdistanzsensors 2 (in Y-Richtung) zu einem optionalen zweiten Laserdistanzsensor 2b bezeichnet. Der Laserdistanzsensor 2 sollte bevorzugt am vorderen Fahrzeugbereich mit freiem Sichtfeld in den Vorschaubereich des Fahrzeuges angeordnet und um einen Neigungswinkel $\alpha$ gegenüber der Fahrzeuglängsachse X in Richtung Fahrbahn bzw. Gelände geneigt sein, wie in Figuren 1 und 2 gezeigt.

Wie in Figur 1 gezeigt, kann aus der geometrisch bekannten Position L1, h1, b1, $\alpha$ des Laserdistanzsensors 2 im Fahrzeug und der gemessenen Länge $La_0$ des Strahls des Laserdistanzsensors 2 zwischen dem Laserdistanzsensor 2 (also dem Ursprung des Strahls) und einem Messpunkt Pa am Gelände (hier zu dem Zeitpunkt t=0) die Steigung bzw. der Winkel $\xi$ bzw. $\Psi$ der dem Gelände angenäherten Geraden Ga gegenüber dem fahrzeugfesten Bezugssystem X, Y, Z bestimmt werden. Durch Umrechnung mit dem Winkelsignal des Inklinometers 1 wird der Steigungswinkel im Absolutsystem z.B. nach einem Verfahren aus dem Stand der Technik berechnet, z.B. gemäß dem in der US 2015/355 328 A vorgeschlagenen Verfahren. Als Messprinzip des Inklinometers 1 zur Bestimmung des Winkels gegenüber dem Absolutsystem kann die Gravitation genutzt werden, z.B. ein Beschleunigungs-Sensorcluster, welches aus der Abweichung bzw. dem Einfluss der Erdbeschleunigung die Winkelabweichung bestimmt, oder es kann ein Gyroskop oder ein anderes bekanntes Prinzip wie z.B. eine Wasserwaage, etc., verwendet werden.

Der Winkel $\xi$ gibt die absolute Neigung an kann dabei aus dem Winkel $\varphi$ des Fahrzeuges, genauer dessen Längsachse, gegenüber einem geostationären, also erdfesten, Inertial- bzw. Absolut-System, sowie dem Neigungswinkel $\alpha$ gegenüber der Fahrzeuglängsachse X und dem in Figur 1 eingezeichneten Winkel $\delta$, also dem Winkel zwischen der Geraden Ga und dem Laserstrahl La ermittelt werden. Der Winkel $\Psi$ gibt die relative Neigung an und kann dabei aus der Differenz des Neigungswinkels $\alpha$ gegenüber der Fahrzeuglängsachse X und dem in Figur 1 eingezeichneten Winkel $\delta$, also dem Winkel zwischen der Geraden Ga und dem Laserstrahl La, ermittelt werden.

Aus Figur 1 ist also zu sehen, dass die absolute Neigung wie folgt berechnet werden kann:

$$\xi = \varphi + (\alpha - \delta) \qquad\qquad (1)$$

Aus Figur 1 ist auch zu sehen, dass die relative Neigung wie folgt berechnet werden kann:

$$\Psi = \alpha - \delta \qquad\qquad (2),$$

wobei aus der Trigonometrie, d.h. aus den jeweils gebildeten Dreiecken zur Bestimmung des Winkels gilt:

$$h1/\sin(\delta) = ha/\sin(90° - \alpha), \qquad\qquad (3),$$

wobei

$$Ga = \sqrt{h1^2 + La^2 - 2 * h1 * La * \cos(90° - \alpha)} \qquad\qquad (4).$$

Das erfindungsgemäße Verfahren sieht nun eine dynamische Berechnung zwischen zwei diskreten Zeitschritten, z.B. t=0 und t=1, vor.

In einem ersten Schritt S1 wird die Position des Fahrzeugs im Absolutsystem bzw. die zurückgelegte Wegstrecke L des Fahrzeugs und daraus der entsprechende Bewegungsvektor $Ga_0$, $Ga_1$ zu jedem der Zeitpunkte t=0 und t=1 bestimmt. $Ga_0$, Ga1 ist dabei jeweils eine an das Gelände angenäherte Gerade, wie bereits beschrieben. Diese Ermittlung kann mittels GPS oder einem Inklinometer 1 oder anderen Methoden erfolgen.

Bei der Bestimmung mittels GPS kann das Inklinometer 1 entfallen, da aus der GPS-Position die Koordinaten X, Y, Z im Absolutsystem für die Zeitpunkte t=0 und t = 1 bekannt sind und die zurückgelegte Wegstrecke L des Fahrzeugs vektoriell bestimmbar ist, d.h. es wird ein Bewegungsvektor bestimmt. Damit ist auch die überfahrene, bei hinreichend kleinen Zeitschritten die aktuelle Steigung bekannt, wodurch das Inklinometer 1 für Gebiete bzw. Anwendungen mit guter GPS-Signalabdeckung entfallen kann.

Alternativ kann die Wegstrecke L bzw. der Bewegungsvektor auch aus der Fahrgeschwindigkeit oder bekannten bzw. erfassten Rad- oder Abtriebsdrehzahlen ermittelt werden, wobei die vektorielle Orientierung in der Fahrzeug-X-Z-Ebene aus einem vorhandenen Inklinometer 1 bekannt ist.

In einem zweiten Schritt S2 wird aus dem nunmehr bekannten Bewegungsvektor $Ga_0$, $Ga_1$ und den Vektoren des Laserstrahls, also Länge La und Winkel $\alpha$, zu den Zeitpunkten t=0 und t=1 der Differenzvektor $Ga_{0,1}$ bestimmt. Dieser nähert für kleine Zeitschritte die Steigung des Geländes deutlich besser an als der Vektor Ga, wie in Figur 2, untere Abbildung gezeigt ist.

In einer alternativen Ausführung wird ein zweiter Laserdistanzsensor 2b bereitgestellt, der um einen Winkel $\alpha$-$\beta$ gegenüber der Fahrzeuglängsachse X in Richtung der Fahrbahn bzw. des Geländes geneigt ist. Die Strahlen La und Lb der beiden Laserdistanzsensoren 2 und 2b schließen den Winkel $\beta$ ein. Durch die unterschiedlichen Neigungswinkel der beiden Laserdistanzsensoren 2 und 2b sind die Messpunkte Pa und Pb am Gelände, auf die der jeweilige Laserstrahl La bzw. Lb trifft, voneinander beabstandet. Auch sind somit zu jedem Zeitpunkt die beiden Vektoren, d.h. Länge und Winkel, der Laserstrahlen La und Lb bekannt und der Differenzvektor $Ga_{0,1}$, d.h. die Geländesteigung, kann zu jedem Zeitschritt t=0, t=1 etc. und auch im Stillstand berechnet werden.

Vorteilhafterweise sind die beiden Laserdistanzsensoren 2 und 2b nebeneinander an der Vorderseite des Fahrzeugs und mit freier Sicht in den Vorschaubereich angeordnet. Vorteilhafterweise verläuft der Geländevektor $Gb_0$ diagonal über die Fahrbahn im Vorschaubereich, wie in Figur 3 gezeigt, denn auf diese Weise lassen sich aus den Vektorkomponenten die Steigungen entlang und quer zur Fahrtrichtung bestimmen. Zur Erfassung der Querneigung sind die beiden Laserdistanzsensoren 2 und 2b vorteilhafterweise über die Fahrzeugbreite, also in Y-Richtung, vorgesehen. Dabei ist das Inklinometer 1 oder die entsprechende Einrichtung zur Erfassung der Absolutposition des Fahrzeugs, wie oben beschrieben, für beide gleich.

Wenn ein einzelner Laserdistanzsensor 2 verwendet wird, ist dieser vorteilhafterweise mittig an der Vorderseite des Fahrzeugs angeordnet, eine paarweise Anordnung von zwei Laserdistanzsensoren 2 und 2b ist vorteilhafterweise symmetrisch ausgeführt.

Eine Vermessung der Fahrbahnquerneigung kann auch durch einen einzelnen zentral angeordneten Laserdistanzsensor 2 erfolgen, der zwei Messstrahlen aussendet, als sensorinterne Duplikation bezeichnet. Diese sind in der X-Y-Ebene des Fahrzeugs gespreizt ausgerichtet, d.h. sie weisen einen Winkel zur Fahrzeuglängsachse X auf, wie in Figur 3 als Winkel zwischen den Pfeilen zu den Messpunkten Pa und Pb zu sehen ist.

Statt einer Duplikation des Laserdistanzsensors ist auch ein sequentielles Umschalten möglich. Das Umschalten kann durch Drehen des Sensors oder Umschalten der Optik, also z.B. des Prismas, erfolgen. Die Umschaltung kann über die Fahrbahnbreite erfolgen oder unterschiedliche Vorschaulängen in Abhängigkeit der Fahrgeschwindigkeit umfassen.

Vorteilhafterweise ist der bzw. sind die Laserdistanzsensor(en) im Fahrzeuginnenraum hinter der Windschutzscheibe in einem Bereich, der vom Scheibenwischer gereinigt wird, angeordnet. Auch die Integration im Scheinwerfer, insbesondere wenn eine Kunststoffverglasung vorhanden ist, ist besonders geeignet. Durch eine Verbindung mit der Verstellvorrichtung für Kurvenlicht und Niveauregulierung kann eine korrekte Ausrichtung auch bei wechselnder Beladung gewährleistet werden, so dass der Vorschaubereich in Kurven auf den relevanten Bereich konzentriert werden kann.

Vorteilhafterweise ist das Laserlicht von der Wellenlänge im nicht sichtbaren Bereich, d.h. im Infrarot-Bereich IR oder im Ultraviolett-Bereich UV.

In einem weiteren Schritt S3 können das ermittelte Steigungssignal bzw. die ermittelten Neigungsdaten weiterverwendet bzw. weiterverarbeitet werden.

Beispielsweise kann nun basierend auf den ermittelten Neigungsdaten bzw. dem ermittelten Steigungssignal eine Anpassung der Fahrzeugparameter, insbesondere der Dynamikparameter, erfolgen. Die auf diese Weise ermittelte Steigung kann somit für die Regelung der Längsdynamik, also z.B. Motormanagement, Schaltstrategie, Traktionsmanagement, Energiemanagement, etc. genutzt werden. Beispielsweise schaltet das Getriebe vor der Steigung rechtzeitig herunter, Allrad und Differentialsperren werden rechtzeitig ein- und ausgelegt, verschleißfreie Bremsen (Retarder) werden bei Bergabfahrt optimal angesteuert und die Schlupfregelung beim Anfahren (ASR) und Bremsen (ABS) wird optimiert. Bezüglich Vertikaldynamik (Heben, Nicken, Wanken) und Querdynamik eines Fahrzeuges kann das aktuelle und vorausschauende Steigungssignal zur verbesserten Regelung genutzt werden.

Des Weiteren besteht die Möglichkeit der Digitalisierung des Geländes und Fernübertragung dieser ermittelten Daten. Vorteilhafterweise werden die Daten mehrerer Fahrzeuge zentral in einem Server, z.B. in einer cloud-Umgebung, gespeichert und mit Kartendaten abgeglichen. Außerdem können Fahrdynamikeinstellungen für Längs-, Vertikal- und Querdynamik online oder offline optimiert und dem Fahrzeug oder anderen Fahrzeugen, wenn diese über entsprechende Kommunikationsmöglichkeiten verfügen, rechtzeitig bzw. vorausschauen bereitgestellt werden, so dass die optimalen Parameter bereits eingestellt sind, wenn das Fahrzeug den Vorschaubereich befährt.

Der Vorteil der Verwendung von Laserdistanzsensoren ist, dass diese im Vergleich zu Laserscannern um ca. den Faktor 5-10 günstiger, sehr kompakt, robust und mit hinreichender Genauigkeit verfügbar sind. Durch das vorgeschlagene Verfahren und die entsprechende Anordnung können diese Vorteile genutzt werden und zusätzlich ein System und Verfahren bereitgestellt werden, das sehr genau ist.

**Patentansprüche**

1. Anordnung zur Bestimmung eines Steigungssignals in einem Fahrzeug, aufweisend

   - zumindest eine Positionserfassungseinrichtung (1), die dazu eingerichtet ist, die Position des Fahrzeugs in einem Absolutsystem (XYZ) zumindest zu einem ersten Zeitpunkt (t=0) und zu einem zweiten Zeitpunkt (t=1) zu bestimmen, und daraus die zurückgelegte Wegstrecke (L) des Fahrzeugs als Bewegungsvektor ($Ga_0$, $Ga_1$) zu ermitteln, und
   - zumindest einen an einer Vorderseite des Fahrzeugs in einem vorgegebenen Winkel ($\alpha$) zur Fahrzeuglängsachse (X) geneigt angeordneten und in seiner geometrischen Position (L1, h1, b1, $\alpha$) im Fahrzeug bekannten ersten Laserdistanzsensor (2), der dazu eingerichtet ist, zumindest zu dem ersten und dem zweiten Zeitpunkt (t=0; t=1) zumindest einen ersten Laserstrahl in Richtung eines ersten Messpunkts (Pa) vor dem Fahrzeug auszusenden,
   - wobei die Positionserfassungseinrichtung dazu eingerichtet ist, aus der Position des Fahrzeugs und in Abhängigkeit der geometrisch bekannten Position (L1, h1, b1, $\alpha$) des ersten Laserdistanzsensors (2) die zurückgelegte Wegstrecke (L) des Fahrzeugs als Bewegungsvektor ($Ga_0$, $Ga_1$) zu ermitteln, und
   - zumindest ein Mittel, das dazu eingerichtet ist, die Länge des zumindest einen Laserstrahls (La) und zumindest einen zugehörigen Vektor des Laserstrahls zu jedem des zumindest ersten und zweiten Zeitpunkts (t=0; t=1) zu ermitteln, und
   - zumindest eine Ermittlungseinrichtung, die dazu eingerichtet ist, einen Differenzvektor ($Ga_{0,1}$) aus dem zu jedem der ersten und zweiten Zeitpunkte bestimmten Bewegungsvektor ($Ga_0$, $Ga_1$) und jedem der ermittelten Vektoren des Laserstrahls zu ermitteln und daraus ein Steigungssignal zu bilden.

2. Anordnung nach Anspruch 1, wobei der erste Laserdistanzsensor (2) zu zumindest zu dem ersten und dem zweiten Zeitpunkt (t=0; t=1) zwei in Fahrzeuglängsachse (X) und Fahrzeugquerrichtung (Y) gespreizte Laserstrahlen derart aussendet, dass einer der gespreizten Laserstrahlen der erste Laserstrahl ist und in Richtung des ersten Messpunkts (Pa) ausgesendet wird, und der zweite der gespreizten Laserstrahlen in Richtung eines von dem ersten Messpunkt entfernten weiteren Messpunkt (Pb) ausgesendet wird.

3. Anordnung nach Anspruch 2, wobei das Aussenden der zwei Laserstrahlen durch sequentielles Umschalten erfolgt, umfassend ein Drehen des Laserdistanzsensors (2) oder ein Umschalten der Optik des Laserdistanzsensors (2).

4. Anordnung nach einem der vorhergehenden Ansprüche, mit einem zweiten an einer Vorderseite des Fahrzeugs in einem vorgegebenen Winkel ($\alpha$-$\beta$) zur Fahrzeuglängsachse (X) geneigt angeordneten Laserdistanzsensor (2b), der dazu eingerichtet ist, zumindest zu dem ersten und dem zweiten Zeitpunkt (t=0; t=1) zumindest einen zweiten Laserstrahl auf einen zweiten Messpunkt (Pb) vor dem Fahrzeug zu richten, wobei das zumindest eine Mittel ferner dazu eingerichtet ist, die Länge des Laserstrahls (La; Lb) beider Laserdistanzsensoren (2; 2b) und jeweils zumindest einen zugehörigen Vektor der Laserstrahlen zu ermitteln, und

   - wobei die zumindest eine Ermittlungseinrichtung ferner dazu eingerichtet ist, einen Differenzvektor ($Ga_{0,1}$, $Gb_0$) aus dem Bewegungsvektor ($Ga_0$, $Ga_1$) und den ermittelten Vektoren der Laserstrahlen zu ermitteln und daraus das Steigungssignal zu bilden.

5. Anordnung nach Anspruch 4, wobei der erste und der zweite Laserdistanzsensor (2; 2b) in Fahrzeugquerrichtung (Y) nebeneinander angeordnet sind.

6. Anordnung nach einem der vorhergehenden Ansprüche, wobei die Anordnung ferner eine Weiterverarbeitungseinrichtung aufweist, die dazu eingerichtet ist, das Steigungssignal weiterzuverarbeiten, wobei die Weiterverarbeitung durch Senden des Steigungssignals an eine im Fahrzeug vorhandene Regelungseinrichtung erfolgt, die dazu eingerichtet ist, das Steigungssignal weiterzuverarbeiten und eine Anpassung der Dynamikparameter basierend auf dem empfangenen und verarbeiteten Steigungssignal durchzuführen, oder wobei die Weiterverarbeitung durch Senden des Steigungssignals an eine externe Verarbeitungseinrichtung erfolgt, die dazu eingerichtet ist, das Steigungssignal in Steuersignale weiterzuverarbeiten und an die Weiterverarbeitungseinrichtung im Fahrzeug zur Durchführung der Anpassung der Dynamikparameter des Fahrzeugs zurückzusenden.

7. Verfahren zur Bestimmung eines Steigungssignals in einem Fahrzeug, aufweisend die Schritte:

    erster Schritt (S1): Bestimmung der Position des Fahrzeugs in einem Absolutsystem (XYZ) zumindest zu einem ersten Zeitpunkt (t=0) und zu einem zweiten Zeitpunkt (t=1) und daraus und in Abhängigkeit der geometrisch bekannten Position (L1, h1, b1, $\alpha$) des ersten Laserdistanzsensors (2) Ermittlung der zurückgelegten Wegstrecke (L) als Bewegungsvektor (Ga$_0$, Ga$_1$);
    zweiter Schritt (S2): Bestimmung eines Differenzvektors (Ga$_{0,1}$, Gb$_0$) aus dem Bewegungsvektor (Ga$_0$, Ga$_1$) und den zu dem ersten und dem zweiten Zeitpunkt (t=0; t=1) ermittelten Vektoren des Laserstrahls zumindest eines an einer Vorderseite des Fahrzeugs in einem vorgegebenen Winkel ($\alpha$) zur Fahrzeuglängsachse (X) geneigt angeordneten ersten Laserdistanzsensors (2), der zumindest zu dem ersten und dem zweiten Zeitpunkt (t=0; t=1) zumindest einen ersten Laserstrahl in Richtung eines ersten Messpunkts (Pa) vor dem Fahrzeug aussendet, und daraus Ermitteln eines Steigungssignals.

8. Verfahren nach Anspruch 7, mit dem weiteren Schritt:
    dritter Schritt (S3): Weiterverarbeitung des ermittelten Steigungssignals.

9. Verfahren nach Anspruch 8, wobei die Weiterverarbeitung erfolgt durch:

    - interne Berechnung eines Steuersignals zur Anpassung der Dynamikparameter des Fahrzeugs und Durchführung der Anpassung, oder
    - Senden des Steigungssignals zur externen Verarbeitung und Empfangen zumindest eines aus dem Steigungssignal ermittelten Steuersignals zur Anpassung der Dynamikparameter des Fahrzeugs, und Durchführung der Anpassung.

10. Verfahren nach Anspruch 9, wobei das weiterverarbeitete Steigungssignal und/oder das Steuersignal zur Digitalisierung des Geländes verwendet und/oder anderen Fahrzeugen bereitgestellt werden.

**Claims**

1. Arrangement for determining a gradient signal in a vehicle, having

    - at least one position detection device (1) which is configured to determine the position of the vehicle in an absolute system (XYZ) at least at a first point in time (t=0) and at a second point in time (t=1), and to use this to determine the distance (L) covered by the vehicle as a movement vector (Ga$_0$, Ga$_1$), and
    - at least one first laser distance sensor (2) which is arranged with an inclination of a predefined angle ($\alpha$) with respect to the vehicle longitudinal axis (X) on a front side of the vehicle and whose geometric position (L1, h1, b1, $\alpha$) in the vehicle is known and which is configured to emit at least one first laser beam at least at the first and the second point in time (t=0; t=1) in the direction of a first measurement point (Pa) in front of the vehicle,
    - wherein the position detection device is configured to determine the distance (L) covered by the vehicle as a movement vector (Ga$_0$, Ga$_1$) from the position of the vehicle and on the basis of the geometrically known position (L1, h1, b1, $\alpha$) of the first laser distance sensor (2), and
    - at least one means which is configured to determine the length of the at least one laser beam (La) and at least one associated vector of the laser beam at each of the at least first and second points in time (t=0; t=1), and
    - at least one determination device which is configured to determine a differential vector (Ga$_{0,1}$) from the movement vector (Ga$_0$, Ga$_1$) determined at each of the first and second points in time and each of the determined vectors of the laser beam and to form a gradient signal therefrom.

2. Arrangement according to Claim 1, wherein the first laser distance sensor (2) emits, at least at the first and the second point in time (t=0; t=1), two laser beams spread in the vehicle longitudinal axis (X) and the vehicle transverse direction (Y) in such a way that one of the spread laser beams is the first laser beam and is emitted in the direction of the first measurement point (Pa), and the second of the spread laser beams is emitted in the direction of a further measurement point (Pb) remote from the first measurement point.

3. Arrangement according to Claim 2, wherein the two laser beams are emitted by sequential switching, comprising a rotation of the laser distance sensor (2) or a switching of the optical unit of the laser distance sensor (2).

4. Arrangement according to one of the preceding claims, having a second laser distance sensor (2b) which is arranged with an inclination of a predefined angle ($\alpha$-$\beta$) with respect to the vehicle longitudinal axis (X) on a front side of the vehicle and is configured to direct at least one second laser beam onto a second measurement point (Pb) in front of the vehicle at least at the first and the second point in time (t=0; t=1), wherein the at least one means is furthermore configured to determine the length of the laser beam (La; Lb) from both laser distance sensors (2; 2b) and in each case at least one associated vector of the laser beams, and

   - wherein the at least one determination device is furthermore configured to determine a differential vector ($Ga_{0,1}$, $Gb_0$) from the movement vector ($Ga_0$, $Ga_1$) and the determined vectors of the laser beams and to form the gradient signal therefrom.

5. Arrangement according to Claim 4, wherein the first and the second laser distance sensor (2; 2b) are arranged next to one another in the vehicle transverse direction (Y).

6. Arrangement according to one of the preceding claims, wherein the arrangement further comprises a further processing device which is configured to further process the gradient signal, wherein the further processing is carried out by sending the gradient signal to a regulating device which is present in the vehicle and is configured to further process the gradient signal and to adapt the dynamic parameters on the basis of the received and processed gradient signal, or wherein the further processing is carried out by sending the gradient signal to an external processing device which is configured to further process the gradient signal into control signals and to send it back to the further processing device in the vehicle in order to adapt the dynamic parameters of the vehicle.

7. Method for determining a gradient signal in a vehicle, having the steps of:

   First step (S1): determining the position of the vehicle in an absolute system (XYZ) at least at a first point in time (t=0) and at a second point in time (t=1) and using this to determine, on the basis of the geometrically known position (L1, h1, b1, $\alpha$) of the first laser distance sensor (2), the distance (L) covered as a movement vector ($Ga_0$, $Ga_1$);
   Second step (S2): determining a differential vector ($Ga_{0,1}$, $Gb_0$) from the movement vector ($Ga_0$, $Ga_1$) and the vectors of the laser beam, determined at the first and the second point in time (t=0; t=1), from at least one first laser distance sensor (2) which is arranged with an inclination of a predefined angle ($\alpha$) with respect to the vehicle longitudinal axis (X) on a front side of the vehicle and emits at least one first laser beam at least at the first and the second point in time (t=0; t=1) in the direction of a first measurement point (Pa) in front of the vehicle, and determining a gradient signal therefrom.

8. Method according to Claim 7, having the further step of:
   Third step (S3): further processing the determined gradient signal.

9. Method according to Claim 8, wherein the further processing is carried out by:

   - internally calculating a control signal for adapting the dynamic parameters of the vehicle, and carrying out the adaptation, or
   - sending the gradient signal for external processing and receiving at least one control signal, determined from the gradient signal, for adapting the dynamic parameters of the vehicle, and carrying out the adaptation.

10. Method according to Claim 9, wherein the further processed gradient signal and/or the control signal is/are used to digitize the terrain and/or is/are made available to other vehicles.

**Revendications**

1. Arrangement pour spécifier un signal de déclivité dans un véhicule, comprenant

   - au moins un dispositif de détection de position (1), qui est conçu pour spécifier la position du véhicule dans un système absolu (XYZ) au moins à un premier instant (t=0) et à un deuxième instant (t=1), et pour déterminer à partir de là la distance parcourue (L) du véhicule en tant que vecteur de mouvement (Ga$_0$, Ga$_1$), et

- au moins un premier capteur de distance à laser (2), disposé au niveau d'un côté avant du véhicule, incliné d'un angle prédéterminé ($\alpha$) par rapport à l'axe longitudinal (X) du véhicule, et dont la position géométrique (L1, h1, b1, $\alpha$) dans le véhicule est connue, lequel est conçu pour émettre au moins un premier faisceau laser en direction d'un premier point de mesure (Pa) devant le véhicule, au moins au premier et au deuxième instant (t=0 ; t=1),

- le dispositif de détection de position étant conçu pour déterminer, à partir de la position du véhicule et en fonction de la position géométrique (L1, h1, b1, $\alpha$) connue du premier capteur de distance à laser (2), la distance parcourue (L) du véhicule en tant que vecteur de mouvement (Ga$_0$, Ga$_1$), et

- au moins un moyen, qui est conçu pour déterminer la longueur de l'au moins un faisceau laser (La) et au moins un vecteur associé du faisceau laser à chacun des au moins premier et deuxième instants (t=0 ; t=1), et

- au moins un dispositif d'identification qui est conçu pour déterminer un vecteur de différence (Ga$_{0,1}$) à partir du vecteur de mouvement (Ga$_0$, Ga$_1$) déterminé à chacun des premier et deuxième instants et de chacun des vecteurs déterminés du faisceau laser et pour former, à partir de là, un signal de déclivité.

2. Arrangement selon la revendication 1, le premier capteur de distance à laser (2) émettant, au moins au premier et au deuxième instant (t=0 ; t=1), deux faisceaux laser étalés dans l'axe longitudinal du véhicule (X) et dans la direction transversale du véhicule (Y), de telle sorte que l'un des faisceaux laser étalés est le premier faisceau laser et est émis en direction du premier point de mesure (Pa), et le deuxième des faisceaux laser étalés est émis en direction d'un point de mesure supplémentaire (Pb) éloigné du premier point de mesure.

3. Arrangement selon la revendication 2, l'émission des deux faisceaux laser s'effectuant par permutation séquentielle, comprenant une rotation du capteur de distance à laser (2) ou une permutation de l'optique du capteur de distance à laser (2).

4. Arrangement selon l'une des revendications précédentes, comprenant un deuxième capteur de distance à laser (2b) disposé au niveau d'un côté avant du véhicule, incliné d'un angle prédéterminé ($\alpha$-$\beta$) par rapport à l'axe longitudinal du véhicule (X), lequel est conçu pour, au moins au premier et au deuxième instant (t=0 ; t=1), diriger au moins un deuxième faisceau laser sur un deuxième point de mesure (Pb) devant le véhicule, l'au moins un moyen étant en outre conçu pour déterminer la longueur du faisceau laser (La ; Lb) des deux capteurs de distance à laser (2 ; 2b) et respectivement au moins un vecteur associé des faisceaux laser, et

- l'au moins un dispositif de détermination étant en outre conçu pour déterminer un vecteur de différence (Ga$_{0,1}$, Gb$_0$) à partir du vecteur de mouvement (Ga$_0$, Ga$_1$) et des vecteurs déterminés des faisceaux laser et pour, à partir de là, former le signal de déclivité.

5. Arrangement selon la revendication 4, le premier et le deuxième capteur de distance à laser (2 ; 2b) étant disposés l'un à côté de l'autre dans la direction transversale du véhicule (Y).

6. Arrangement selon l'une des revendications précédentes, l'arrangement possédant en outre un dispositif de traitement ultérieur qui est conçu pour le traitement ultérieur du signal de déclivité, le traitement ultérieur s'effectuant par l'envoi du signal de déclivité à un dispositif de régulation présent dans le véhicule, lequel est conçu pour traiter ultérieurement le signal de déclivité et pour effectuer une adaptation des paramètres dynamiques sur la base du signal de déclivité reçu et traité, ou le traitement ultérieur s'effectuant par l'envoi du signal de déclivité à un dispositif de traitement externe, lequel est conçu pour traiter ultérieurement le signal de déclivité en signaux de commande et les renvoyer au dispositif de traitement ultérieur dans le véhicule pour effectuer l'adaptation des paramètres dynamiques du véhicule.

7. Procédé pour spécifier un signal de déclivité dans un véhicule, comprenant les étapes suivantes :

première étape (S1) : spécification de la position du véhicule dans un système absolu (XYZ) au moins à un premier instant (t=0) et à un deuxième instant (t=1) et, à partir de là et en fonction de la position géométrique connue (L1, h1, b1, $\alpha$) du premier capteur de distance à laser (2), détermination de la distance parcourue (L) en tant que vecteur de mouvement (Ga$_0$, Ga$_1$) ;

deuxième étape (S2) : spécification d'un vecteur de différence (Ga$_{0,1}$, Gb$_0$) à partir du vecteur de mouvement (Ga$_0$, Ga$_1$) et des vecteurs déterminés au premier et au deuxième instant (t=0 ; t=1) du rayon laser d'au moins un premier capteur de distance à laser (2), disposé au niveau d'un côté avant du véhicule et incliné d'un angle prédéterminé ($\alpha$) par rapport à l'axe longitudinal du véhicule (X), lequel émet au moins un premier faisceau laser en direction d'un premier point de mesure (Pa) devant le véhicule au moins au premier et au deuxième instant (t=0 ; t=1) et, à partir de là, détermination d'un signal de déclivité.

8. Procédé selon la revendication 7, comprenant l'étape supplémentaire :
troisième étape (S3) : traitement ultérieur du signal de déclivité déterminé.

9. Procédé selon la revendication 8, le traitement ultérieur étant effectué par :

- calcul interne d'un signal de commande en vue de l'adaptation des paramètres dynamiques du véhicule et réalisation de l'adaptation, ou
- envoi du signal de déclivité en vue d'un traitement externe et réception d'au moins un signal de commande déterminé à partir du signal de déclivité en vue de l'adaptation des paramètres dynamiques du véhicule, et réalisation de l'adaptation.

10. Procédé selon la revendication 9, le signal de déclivité traité ultérieurement et/ou le signal de commande étant utilisés pour numériser le terrain et/ou étant mis à la disposition d'autres véhicules.

Stand der Technik  Fig. 1

Fig. 3

Fig. 4

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2910512 B1
- US 2011260033 A
- US 2016128783 A
- US 2016076228 A
- US 2015336546 A1
- US 2010030473 A1
- US 2015120244 A1
- US 5714928 A
- DE 102007037162 A1
- US 2015355328 A